# EUROPÄISCHE PATENTSCHRIFT

(11) **EP 3 015 631 B1**
(45) Veröffentlichungstag und Bekanntmachung des Hinweises auf die Patenterteilung: **04.09.2019**
(21) Anmeldenummer: 15191386.0
(22) Anmeldetag: 26.10.2015
(51) Int. Cl.: E05F 15/43, G01V 8/20

(54) **TORFLÜGEL MIT SICHERHEITSANORDNUNG UND VERFAHREN ZUM ABSICHERN EINES TORFLÜGELS EINES SCHWENKTORES**
GATE WING WITH SAFETY ASSEMBLY AND METHOD FOR SECURING A GATE WING OF A PIVOTING GATE
BATTANT DE PORTE AVEC SYSTÈME DE SECURITÉ ET PROCÉDÉ DE SÉCURISATION D'UN BATTANT DE PORTE PIVOTANTE

(30) Priorität: 28.10.2014 DE 102014221953; 15.01.2015 DE 102015200518
(43) Veröffentlichungstag der Anmeldung: 04.05.2016
(73) Patentinhaber: Strassacker Project GmbH & Co. KG, 73079 Süssen (DE)
(72) Erfinder: Cabir, Yusuf, 73072 Donzdorf (DE)
(74) Vertreter: Patentanwälte Ruff, Wilhelm, Beier, Dauster & Partner mbB

(56) Entgegenhaltungen:
- EP-A1- 2 226 452
- EP-A1- 2 648 022
- EP-A2- 1 832 866
- EP-A2- 2 108 775
- DE-C1- 10 129 230
- US-A1- 2004 233 414

## Beschreibung

Die Erfindung betrifft einen Torflügel für Schwenktore, mit wenigstens einem Torflügel, einem motorischen Antrieb für den Torflügel und einer Sicherheitsanordnung, wobei ein am Torflügel angeordneter Sensor vorgesehen ist. Die Erfindung betrifft auch ein Verfahren zum Absichern eines Torflügels eines Schwenktores beim Öffnen und Schließen.

Aus der europäischen Offenlegungsschrift EP 1 832 866 A2 ist ein Türsensorsystem bekannt, das wenigstens eine Lichtscannereinrichtung aufweist, um ein Objekt in oder nahe der Tür zu detektieren. Die Lichtscannereinrichtung arbeitet mit einer Infrarot-Laserdiode, die kurze Laserpulse abgibt. Die Laserpulse werden über einen rotierenden Spiegel abgelenkt. Befindet sich ein Objekt in dem zu überwachenden Bereich, wird ein Teil des Lichtpulses zurückreflektiert. Das zurückreflektierte Licht wird über einen Empfänger erfasst und führt zu einem Detektionssignal. Die Lichtscannereinrichtung kann im Bereich der oberen Mitte eines Türflügels angeordnet werden. Überwacht wird dann ein in Bewegungsrichtung vorne liegender Bereich vor dem Türflügel.

Aus der europäischen Offenlegungsschrift EP 2 226 452 A1 ist ein Türüberwachungssensor bekannt, der als Triangulationssensor ausgebildet ist. Die Empfangseinheit und die Sendeeinheit des Sensors sind getrennt voneinander im oberen Bereich eines Schwenkflügels einer Türe angeordnet.

Aus der deutschen Patentschrift DE 101 29 230 C1 ist eine Sensoranordnung für die Überwachung einer Raumzone mindestens eines motorisch angetriebenen Flügels einer Tür bekannt. Wenn eine motorisch betriebene Karusselltür überwacht werden soll, so ist diese an ihrer Unterseite, die also gegenüber der Bodenfläche liegt, mit einer Senderleiste und einer Empfängerleiste versehen. Die Senderleiste weist mehrere, nebeneinander angeordnete Lichtsender auf und die Empfängerleiste weist mehrere, nebeneinander angeordnete Lichtempfänger auf. Die Senderleiste und die Empfängerleiste werden übereinander montiert und die Lichtsender strahlen Lichtstrahlen aus, die nicht parallel zur Bodenoberfläche, sondern in einem kleinen Winkel von der Bodenoberfläche weg laufen. Jeder Lichtsender strahlt einen gebündelten gerichteten Strahl aus und das von einem eventuell vorhandenen Objekt reflektierte Licht wird durch die Lichtempfänger ausgewertet. Um die vollständige Breite der Türe abzudecken, sind zahlreiche Lichtsender und Lichtempfänger nebeneinander vorgesehen, im dargestellten Beispiel sind 16 Lichtsender und 16 Lichtempfänger vorgesehen.

Aus der US-Offenlegungsschrift US 2004/0233414 A1 ist ein Laserscanner bekannt, der oberhalb einer zu überwachenden Oberfläche angeordnet wird und das Vorhandensein eines Objekts auf der zu überwachenden Oberfläche detektiert. Der Laserscanner ist beispielsweise zum Einsatz in Hubschraubern für die Bodenüberwachung oder auch auf Schiffen für die Überwachung der Meeresoberfläche vorgesehen.

Aus der europäischen Offenlegungsschrift EP 2 108 775 A2 ist eine motorisch angetriebene Karusselltür bekannt, die mit einer Überwachungseinrichtung versehen ist. Die Überwachungseinrichtung weist an jedem Flügel der Karusselltür im Bereich des oberen Endes zahlreiche nebeneinander angeordnete Sensoren auf, die den Bereich vor dem jeweiligen Türflügel überwachen. Zusätzlich sind weitere Sensoren an den beiden Kanten der Türöffnungen vorgesehen, auf die die Türflügel zulaufen.

Die europäische Offenlegungsschrift EP 2 648 022 A1 beschreibt einen Torflügel mit einem motorischen Antrieb und einer Sicherheitsanordnung mit einem Sensor, der als Laserscanner ausgebildet ist. Der Sensor ist an einer Drehachse des Torflügels angeordnet und zum Erzeugen und Überwachen eines Lichtvorhangs ausgebildet. Der Lichtvorhang wird parallel zu einer Bodenoberfläche und parallel zu einer in Bewegungsrichtung des Torflügels vorne liegenden Seite des Torflügels erzeugt.

Mit der Erfindung soll eine verbesserte Absicherung eines Schwenktores mit einem motorischen Antrieb bereitgestellt werden, so dass der motorische Antrieb beim Auftreten von Hindernissen im Bewegungsbereich des Schwenktores rasch abgeschaltet oder reversiert werden kann.

Erfindungsgemäß ist hierzu ein Torflügel für Schwenktore mit den Merkmalen von Anspruch 1 und ein Verfahren mit den Merkmalen von Anspruch 8 vorgesehen.

Erfindungsgemäß ist ein Torflügel für Schwenktore, mit wenigstens einem Torflügel mit einer Sicherheitsanordnung sowie einem motorischen Antrieb für den Torflügel vorgesehen, wobei wenigstens ein am Torflügel angeordneter Sensor zum Erzeugen und Überwachen eines Lichtvorhangs vorgesehen ist, wobei der Lichtvorhang parallel zu einer Bodenfläche und unterhalb des Torflügels und gegebenenfalls zusätzlich parallel zu einer in Bewegungsrichtung des Torflügels vorne liegenden Seite des Torflügels angeordnet ist.

Überraschenderweise lässt sich durch Vorsehen eines Lichtvorhangs in geringem Abstand vor einer in Bewegungsrichtung des Torflügels vorne liegenden Seite des Torflügels eine zuverlässige Detektion von Hindernissen erreichen. Der Lichtvorhang wird im Abstand von wenigen Zentimetern vor der vorne liegenden Seite des Torflügels eingerichtet. In Bezug auf die Seitenkanten und die Unterkante des Torflügels endet der Lichtvorhang ebenfalls einige wenige Zentimeter vor den Seitenkanten bzw. vor der Unterkante des Torflügels. Beispielsweise hat es sich als vorteilhaft herausgestellt, wenn der Lichtvorhang 2 cm vor der vorne liegenden Seite des Torflügels eingerichtet wird und auch jeweils 2 cm vor den Seitenkanten bzw. der Unterkante des Torflügels endet. Überraschenderweise genügt es dabei, einen Lichtvorhang zum Detektieren von Hindernissen einzusetzen, da moderne Antriebe auch für sehr große Torflügel, insbesondere elektrische Antriebe, sehr rasch gestoppt bzw. reversiert werden können, so dass auch bei einer Detektion von Hindernissen in sehr geringem Abstand vor dem Torflügel, nämlich durch den Lichtvorhang, eine ausreichende Sicherheit gegeben ist. Der Erfindung liegt die Erkenntnis zugrunde, dass ein Lichtvorhang, der an und für sich nur räumlich feststehend zur Absicherung von Gefahrenstellen eingesetzt wird, besonders vorteilhaft und einfach auch zur Absicherung von bewegten Torflügeln von Schwenktüren verwendet werden kann, wenn der Lichtvorhang mit dem Torflügel mitgeführt wird und somit während der Bewegung des Torflügels in geringem Abstand vor der vorne liegenden Seite des Torflügels mit dem Torflügel mitbewegt wird.

Erfindungsgemäß wird der Lichtvorhang parallel zur Bodenoberfläche erzeugt. Zwischen der Unterseite eines Torflügels und der Bodenoberfläche, über die der Torflügel hinwegbewegt wird, ist in der Regel ausreichend Platz, um einen Sensor zur Erzeugung und Überwachung eines Lichtvorhangs anzuordnen. Der mittels eines solchen Sensors erzeugte Lichtvorhang verläuft dann parallel zur Bodenoberfläche, wobei die Abmessungen des Lichtvorhangs mittels geeigneter Sensoren im Wesentlichen beliebig einstellbar sind. Der Lichtvorhang bewegt sich, wie auch der an der Unterseite des Torflügels angeordnete Sensor, mit dem Torflügel mit, so dass, im Wesentlichen unabhängig von der Stellung des Torflügels, immer ein vordefinierter Bereich in Bewegungsrichtung vor dem Torflügel überwacht werden kann. Wenn vorgesehen ist, den Torflügel im geschlossenen Zustand auch zur Bodenoberfläche hin abzudichten, können ausfahrbare Dichtungsleisten an der Unterseite des Torflügels vorgesehen sein. Bevor sich der Torflügel beginnt zu bewegen, müssen die Dichtleisten ohnehin wieder von der Bodenoberfläche abgehoben werden, so dass dann mittels der Sensoren der Lichtvorhang erzeugt und die Bewegung des Torflügels abgesichert werden kann.

Erfindungsgemäß ist der Sensor als Laserscanner ausgebildet. Gerade Laserscanner haben sich als besonders vorteilhaft für die Absicherung von Schwenktoren erwiesen. Ein Laserstrahl oder mehrere Laserstrahlen werden dabei in einer Ebene abgelenkt, um einen Lichtvorhang aufzuspannen.

In Weiterbildung der Erfindung ist der Sensor als Infrarot-Laserscanner ausgebildet.

Auf diese Weise kann ein für das menschliche Auge unsichtbarer Lichtvorhang bereitgestellt werden.

In Weiterbildung der Erfindung ist ein Erfassungsbereich des weiteren Sensors in zwei Richtungen parallel zur Vorderseite des Torflügels einstellbar.

Auf diese Weise kann der Lichtvorhang seitlich, nach oben und nach unten begrenzt werden und dadurch genau die Vorderseite des Torflügels bzw. einen gewünschten Abschnitt der Vorderseite des Torflügels absichern. Eine solche Einstellung des Erfassungsbereichs des Sensors erfolgt bei einem Laserscanner beispielsweise dadurch, dass der Laserscanner mit einer Laufzeitmessung des Lichts arbeitet und zum Einstellen des Erfassungsbereichs je nach Ablenkungswinkel des Laserstrahls die zu erwartende Lichtlaufzeit eingestellt wird.

In Weiterbildung der Erfindung ist ein Erfassungsbereich des Sensors in Abhängigkeit eines Öffnungswinkels des Torflügels einstellbar.

Auf diese Weise lassen sich beim Öffnen oder Schließen eines Torflügels eines Schwenktores ändernde geometrische Verhältnisse berücksichtigen. Beispielsweise wird ein Spalt zwischen zwei Torflügeln eines doppelflügeligen Schwenktores beim Aneinanderklappen der beiden Flügel irgendwann so eng, dass keine menschlichen Gliedmaßen mehr in den Spalt hineinpassen. Darüber hinaus muss eine Erfassung von Hindernissen zwangsläufig abgestellt werden, um die beiden Torflügel überhaupt aneinander anklappen zu können. Durch Änderung des Erfassungsbereichs des Sensors in Abhängigkeit vom Schwenkwinkel lassen sich beim Öffnen oder Schließen verändernde räumliche Verhältnisse berücksichtigen. Besonders vorteilhaft ist dabei, dass der Erfassungsbereich des Sensors in einfacher Weise programmierbar ist und der Sensor dadurch leicht auf geänderte räumliche Verhältnisse abgestimmt werden kann.

In Weiterbildung der Erfindung ragt der weitere Sensor im Betrieb aus der vorne liegenden Seite des Torflügels vor.

Auf diese Weise kann der Lichtvorhang zuverlässig in geringem Abstand und parallel zur vorne liegenden Seite des Torflügels aufgespannt werden.

In Weiterbildung der Erfindung ist wenigstens ein Aktuator vorgesehen, um den weiteren Sensor ausgehend von einer bündig oder innerhalb des Torflügels angeordneten Ruhestellung in eine aus der vorne liegenden Seite des Torflügels vorragende Betriebsstellung zu bewegen.

Aus Designgründen kann vorgesehen sein, dass erst kurz vor Beginn der Bewegung des Torflügels der Sensor aus der Oberfläche des Torflügels herausgefahren wird und dann den Lichtvorhang aufspannt. Beispielsweise können beim Öffnen eines Torflügels nur die Sensoren in der Vorderseite des Torflügels ausgefahren werden, beim Schließen des Torflügels werden dann lediglich die an der hinten liegenden Seite des Torflügels angeordneten Sensoren ausgefahren. Beim vollständigen, parallelen Anlegen eines Torflügels an eine Wand eines Gebäudes oder einen anderen Torflügel können die Sensoren dann rechtzeitig wieder in das Innere des Torflügels eingefahren werden.

In Weiterbildung der Erfindung sind wenigstens an den Seitenkanten des Torflügels Schaltleisten vorgesehen, die beim Annähern an ein Hindernis oder beim Berühren eines Hindernisses ein Schaltsignal erzeugen.

Solche Schaltleisten oder Sicherheitskontaktleisten sind für die Sicherheit an Quetschstellen und Scherstellen vorteilhaft. Beispielsweise dann wenn sehr dicke Türflügel um 180° ausgeklappt werden, tritt zwischen den Schmalseiten der Türflügel ein sich allmählich verringernder Spalt auf, der gegen das Einklemmen von menschlichen Gliedmaßen abgesichert werden muss. Weitere Sensoren, beispielsweise optische Sensoren, können ebenfalls eingesetzt werden, um beispielsweise tote Winkel abzusichern. Beispielsweise können zusätzliche Lichtvorhänge parallel zur Bodenoberfläche eingesetzt werden, um sicherzustellen, dass keine Person im Bereich des Tores am Boden liegt oder steht. Sensoren für solche Lichtvorhänge sind vorteilhafterweise an dem Träger angeordnet. Es kann sinnvoll sein, solche Lichtvorhänge, die parallel zur Bodenoberfläche verlaufen, nur zeitweise während des Öffnens oder Schließens zu aktivieren, beispielsweise kurz vor dem endgültigen Schließen des Tors.

Erfindungsgemäß ragt der Sensor im Betrieb aus der Unterseite des Torflügels vor. Auf diese Weise kann ein im Zwischenraum zwischen der Unterseite des Torflügels und der Bodenoberfläche angeordneter Lichtvorhang erzeugt werden, der dann parallel zur Bodenoberfläche verläuft. Erfindungsgemäß wird vorgesehen, dass der Sensor vor dem Erzeugen des Lichtvorhangs aus der Unterseite des Torflügels ausfährt. Beispielsweise kann der Sensor zwischen ausfahrbaren Dichtleisten an der Vorderkante und der Hinterkante des Torflügels angeordnet sein. Die Dichtleisten sind lediglich bei Stillstand des Tors im geschlossenen Zustand so weit ausgefahren, dass sie auf der Bodenoberfläche aufliegen. Bevor der Torflügel beginnt, sich zu bewegen, werden die Dichtleisten von der Bodenoberfläche abgehoben und der zwischen den Dichtleisten angeordnete Sensor kann den Lichtvorhang erzeugen.

Bei einem erfindungsgemäßen Verfahren zum Absichern eines Torflügels eines Schwenktores beim Öffnen und Schließen wird ein Lichtvorhang parallel zu einer in Bewegungsrichtung vorne liegenden Seite des Torflügels und/oder parallel zu einer Bodenoberfläche erzeugt und eine Bewegung des Torflügels wird beim Detektieren eines Hindernisses im Bereich des Lichtvorhangs angehalten und/oder reversiert. Der Lichtvorhang beziehungsweise mehrere Lichtvorhänge werden mittels eines Laserscanners erzeugt.

In Weiterbildung der Erfindung wird der Lichtvorhang mit dem Torflügel beim Öffnen und Schließen mitbewegt.

Erfindungsgemäß sind die Sensoren zum Erzeugen und Überwachen des Lichtvorhangs im Torflügel selbst angeordnet. Dadurch wird der Lichtvorhang zwangsläufig beim Öffnen und Schließen des Torflügels mitbewegt. Der Lichtvorhang ist dadurch automatisch immer dort angeordnet, wo er auch benötigt wird, nämlich in Bewegungsrichtung vor dem Torflügel.

Erfindungsgemäß ist das Ausfahren von Sensoren zum Erzeugen und Überwachen des Lichtvorhangs vor einem Beginn der Bewegung des Torflügels beim Öffnen und Schließen vorgesehen.

Auf diese Weise können die Sensoren gegen Verschmutzung und Beschädigung geschützt angeordnet sein, wenn sich das Tor nicht bewegt. Lediglich dann, wenn die Sensoren zum Erzeugen und Überwachen des Lichtvorhangs benötigt werden, werden sie aus einer geschützten Ruhestellung in eine ausgefahrene Arbeitsstellung bewegt. Weitere Merkmale und Vorteile der Erfindung ergeben sich aus den Ansprüchen und der Beschreibung bevorzugter Ausführungsformen der Erfindung im Zusammenhang mit den beigefügten Zeichnungen.

In den Zeichnungen zeigen:
- Fig. 1: eine schematische Vorderansicht eines nicht beanspruchten Torflügels eines Schwenktores mit einer Sicherheitsanordnung,
- Fig. 2: eine Seitenansicht des Torflügels der Fig. 1,
- Fig. 3: eine schematische abschnittsweise Seitenansicht des Torflügels der Fig. 3 bei eingefahrenem Sensor,
- Fig. 4: eine Fig. 3 entsprechende Darstellung des Torflügels bei ausgefahrenem Sensor,
- Fig. 5, 6 und 7: verschiedene Zwischenstellungen beim Öffnen eines nicht erfindungsgemäßen Schwenktores;
- Fig. 8, 9 und 10: verschiedene Zwischenstellungen beim Schließen eines nicht erfindungsgemäßen Schwenktores,
- Fig. 11: eine schematische Vorderansicht einer erfindungsgemäßen Ausführungsform eines Torflügels eines Schwenktors mit einer Sicherheitsanordnung
- Fig. 12: eine Seitenansicht des Torflügels der Fig. 11,
- Fig. 13: eine abschnittsweise Ansicht des Torflügels der Fig. 12 und
- Fig. 14: eine schematische Darstellung einer Ausführungsform eines erfindungsgemäßen Schwenktors von oben in der vollständig geschlossenen Stellung.

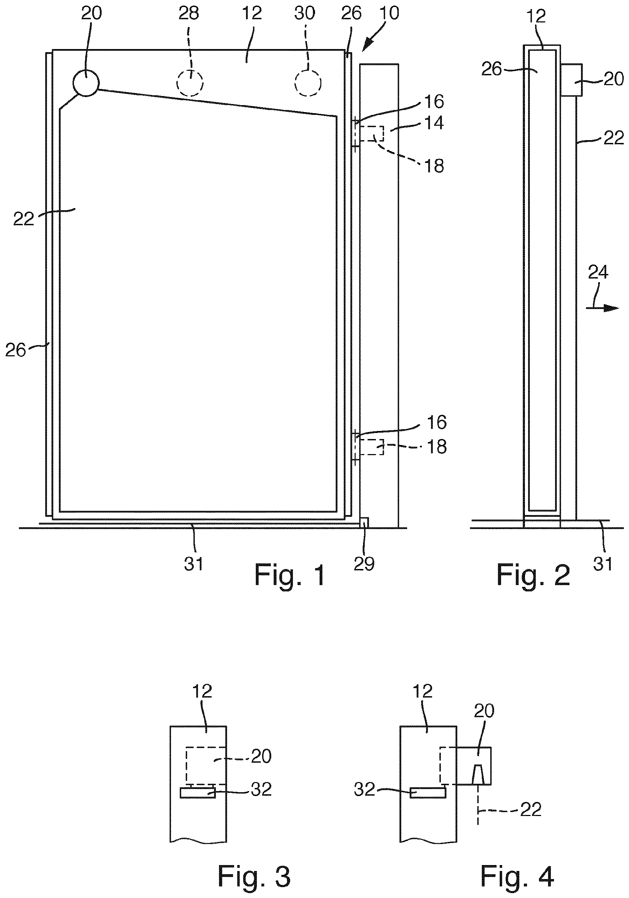

Die Darstellung der Fig. 1 zeigt ein nicht erfindungsgemäßes Schwenktor 10 mit einem Torflügel 12, der schwenkbar an einem feststehenden Träger 14 angeordnet ist. Die Darstellung der Fig. 1 ist schematisch und beispielsweise kann der feststehende Träger 14 Teil eines Gebäudes sein oder auch durch eine Wand eines Gebäudes gebildet sein. Der Träger 14 und der Torflügel 12 sind mittels zweier Scharniere 16 verbunden, die ebenfalls nur schematisch dargestellt sind und die beispielsweise auch in Form von sogenannten Parallelogrammscharnieren ausgebildet sein können, um auch das parallele Anklappen von sehr dicken Torflügeln an eine Gebäudewand zu ermöglichen. Innerhalb des Torflügels 12 oder am Träger 14 ist darüber hinaus ein motorischer Antrieb 18 für eine Bewegung des Torflügels 12 vorgesehen, der lediglich schematisch in gestrichelten Linien angedeutet ist.

Der Torflügel 12 ist mit wenigstens einem Laserscanner 20 versehen, der einen Lichtvorhang 22 aufspannt. Der Lichtvorhang 22 ist, siehe auch Fig. 2, in einem geringen Abstand von etwa 2 cm vor einer in Bewegungsrichtung vorne liegenden Seite des Torflügels 12 aufgespannt. Der Laserscanner 20 erzeugt den Lichtvorhang 22 dabei erst unmittelbar vor einem Beginn der Bewegung des Torflügels 12. Eine Bewegungsrichtung ist in der Darstellung der Fig. 2 mit einem Pfeil 24 angedeutet. Gerät nun ein Hindernis, beispielsweise eine menschliche Hand, in den Lichtvorhang 22, so wird dies von dem Laserscanner 20 detektiert und der Laserscanner 20 gibt daraufhin ein Schaltsignal aus. Dieses Schaltsignal wird über nicht dargestellte Signalleitungen an eine Steuerung der motorischen Antriebe 18 weitergeleitet und verursacht, dass die motorischen Antriebe 18 sofort stoppen oder ihre Bewegungsrichtung reversieren.

Der Lichtvorhang 22 deckt einen Bereich unterhalb des Laserscanners 20 ab. Der Torflügel 12 ist im dargestellten Beispiel sehr hoch und weist eine Höhe von etwa 2 bis 3 m auf. Es genügt daher, wenn der Laserscanner 20 einen Bereich unterhalb des Laserscanners 20 auf Hindernisse überwacht. Der Lichtvorhang 22 endet dabei jeweils wenige Zentimeter, insbesondere 2 cm, vor den Seitenkanten des Torflügels 12. Der Lichtvorhang 22 endet ebenfalls wenige Zentimeter, insbesondere 2 cm, vor einer Unterkante des Torflügels 12. Dadurch, dass der Lichtvorhang wenige Zentimeter vor einer Unterkante des Torflügels 12 endet, wird ermöglicht, dass sehr flache Hindernisse, die niedriger sind als ein menschlicher Fuß, nicht zu einem Abstoppen des Torflügels 12 führen und dadurch beispielsweise kleine Steine oder flache Gegenstände beim Öffnen des Torflügels 12 weggeschoben werden können.

Um je nach den gegebenen räumlichen Verhältnissen aber beispielsweise auch das Einklemmen von menschlichen Gliedmaßen oder Gegenständen unterhalb einer Unterkante des Torflügels 12 zu verhindern, kann eine Unterkante des Torflügels 12 darüber hinaus mit einer Sicherheitskontaktleiste versehen sein.

Bei der dargestellten Ausführungsform sind die in Fig. 1 linke Schmalseite und die rechte Schmalseite des Torflügels 12 mit jeweils einer Sicherheitskontaktleiste 26 versehen. Wenn die Sicherheitskontaktleisten 26 ein Hindernis erfassen, beispielsweise dadurch, dass sie zusammengedrückt werden, geben sie ein Schaltsignal aus, das ebenfalls an die Steuerung der motorischen Antriebe 18 weitergeleitet wird und dann die Bewegung der motorischen Antriebe 18 stoppt oder reversiert.

In der Darstellung der Fig. 1 sind gestrichelt weitere mögliche Positionen 28, 30 für den Laserscanner 20 dargestellt.

Ein weiterer Laserscanner 29 ist am Träger 14 vorgesehen, und zwar am unteren Ende des Trägers, wo dieser in die Bodenoberfläche übergeht. Dieser Laserscanner 29 spannt einen Lichtvorhang 31 auf, der parallel zur Bodenoberfläche verläuft und sich unterhalb des Torflügels 12 erstreckt. Ein solcher Lichtvorhang 31 dient zur Abdeckung von toten Winkeln, insbesondere kurz vor dem vollständigen Schließen des Torflügels 12. Mittels des Lichtvorhangs 31, siehe auch Fig. 2, kann sichergestellt werden, dass keine Person vor oder hinter dem Torflügel 12 steht oder liegt. Wenn dies der Fall ist, kann der Torflügel 12 weiterbewegt werden, da dann sichergestellt ist, dass keine Einklemmgefahr für Personen besteht. Der Laserscanner 29 wird vorteilhafterweise nur zeitweise während des Öffnens bzw. Schließens des Torflügels 12 aktiviert, beispielsweise nur dann, wenn das Tor bereits weitgehend geschlossen ist und nur noch seine Endposition einnehmen soll. Kurz vor dem vollständigen Schließen ist die Gefahr besonders groß, dass sich Personen in den dann entstehenden Spalten zwischen dem Träger 14 und dem Torflügel 12 bzw. zwischen weiteren Torflügeln einklemmen. Der Lichtvorhang 31 kann sicherstellen, dass hier keine Gefahr besteht. Auf der anderen Seite könnte das permanente Einschalten des Lichtvorhangs 31, erzeugt durch den Laserscanner 29, dazu führen, dass ein Öffnungsvorgang bzw. Schließvorgang des Torflügels 12 zu oft unterbrochen wird, da jede Person, die vor oder hinter dem Torflügel 12 steht, den Bewegungsvorgang des Torflügels 12 unterbricht.

Wie Fig. 2 zu entnehmen ist, ragt der Laserscanner 20 über eine in der Bewegungsrichtung 24 vorne liegende Seite des Torflügels 12 hinaus. Dadurch kann der Laserscanner 20 den Lichtvorhang 22 exakt parallel zur Vorderseite des Torflügels 12 aufspannen.

Der Laserscanner 20 kann dabei in seiner in Fig. 2 dargestellten Betriebsstellung fest angeordnet sein, er kann aber auch, wenn er nicht benötigt wird, aus Designgründen in eine innerhalb des Torflügels 12 angeordnete Ruhestellung verfahren werden.

Fig. 3 zeigt den Torflügel 12 abschnittsweise von der Seite. Der Laserscanner 20 ist mit seiner Vorderseite nun bündig zu einer Vorderseite des Torflügels 12 angeordnet.

Die Darstellung der Fig. 4 zeigt eine der Fig. 3 vergleichbare Darstellung, wobei der Laserscanner 20 nun über die Vorderseite des Torflügels 12 hinausragt und den Lichtvorhang 22 parallel zur Vorderseite des Torflügels 12 erzeugen kann. Zum Einfahren und Ausfahren des Laserscanners 20 kann beispielsweise ein Aktuator 32 dienen, der beispielsweise als Linearmotor oder Pneumatik- bzw. Hydraulikzylinder ausgebildet ist.

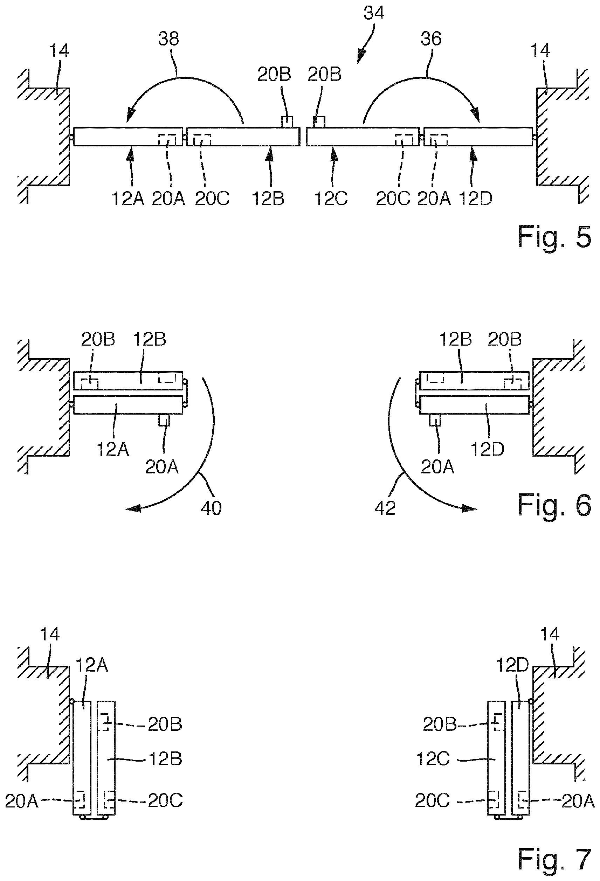

Die Darstellung der Fig. 5 zeigt ein nicht erfindungsgemäßes Schwenktor 34 mit insgesamt vier Torflügeln 12a, 12b, 12c und 12d. Die Torflügel 12a, 12d werden als erste Torflügel bezeichnet und sind jeweils schwenkbar an einem Träger 14 angeordnet, der bei der dargestellten Ausführungsform Teil eines Gebäudes ist. Zwischen dem in Fig. 5 linken und rechten Träger 14 ist eine Gebäudeöffnung angeordnet, die im vollständig geschlossenen Zustand des Schwenktores 34 der Fig. 5 abgesperrt ist.

Die Torflügel 12b, 12c werden als zweite Torflügel bezeichnet und sind schwenkbar mit einer Schmalseite der ersten Torflügel 12a, 12d verbunden, wobei diese Schmalseite den Trägern 14 abgewandt ist.

Die ersten Torflügel 12a, 12d sind jeweils mit einem ersten Laserscanner 20a versehen, der in der Darstellung der Fig. 5 in der eingefahrenen und gestrichelten Ruhestellung dargestellt ist. Die zweiten Torflügel 12b, 12c sind auf ihrer in Fig. 5 oben liegenden Seite, die beim Öffnen vorne liegt, mit jeweils einem zweiten Laserscanner 20b versehen. Da die Fig. 5 den Zustand unmittelbar vor dem Beginn einer Öffnungsbewegung zeigt, sind die zweiten Laserscanner 20b bereits in ihrer ausgefahrenen Stellung dargestellt und spannen jeweils einen Lichtvorhang parallel zur vorne liegenden Seite der Torflügel 12b, 12c auf.

Die zweiten Torflügel 12b, 12c sind jeweils noch mit einem dritten Laserscanner 20c versehen, der auf der beim Öffnen hinten liegenden Seite der zweiten Torflügel 12b, 12c angeordnet ist. Die dritten Laserscanner 20c sind in der Darstellung der Fig. 5 in ihrer Ruhestellung innerhalb der Torflügel 12b bzw. 12c gestrichelt dargestellt.

Zum Öffnen des Schwenktores 34 werden zunächst die zweiten Torflügel 12b, 12c um 180° nach außen, also zu den Trägern 14 hin geklappt. Diese Klappbewegung ist durch die gebogenen Pfeile 36, 38 in Fig. 5 angedeutet. Während einer solchen Öffnungsbewegung der zweiten Torflügel 12b, 12c sichern die von den zweiten Laserscannern 20b aufgespannten Lichtvorhänge eine Bewegung der zweiten Torflügel 12b, 12c ab. Gelangt nämlich ein Hindernis in die Lichtvorhänge vor den in den Bewegungsrichtungen 36, 38 vorne liegenden Seiten der zweiten Torflügel 12b, 12c, so wird eine Bewegung der zweiten Torflügel 12b, 12c sofort gestoppt.

Ausgehend vom Zustand der Fig. 5 werden die zweiten Torflügel 12b, 12c um 180° verschwenkt, bis sie in der in Fig. 6 dargestellten Position angekommen sind. In dieser Position liegen die zweiten Torflügel 12b, 12c jeweils parallel zu den ersten Torflügeln 12a, 12d. Die zweiten Laserscanner 20b müssen dabei unmittelbar vor dem parallelen Anklappen der zweiten Torflügel 12b, 12c an die ersten Torflügel 12a, 12d in die Ruhestellung eingefahren werden. Dies kann aber zu einem Zeitpunkt geschehen, zu dem nicht mehr zu befürchten ist, dass Hindernisse zwischen den zweiten Torflügeln 12b, 12c und den ersten Torflügeln 12a, 12d angeordnet sind.

Ausgehend von der Stellung der Fig. 6 wird das Paket aus dem ersten Torflügel 12a und dem zweiten Torflügel 12b in Richtung eines gekrümmten Pfeils 40 um 90° in Richtung auf den Träger 14 geklappt. In gleicher Weise wird das Paket aus dem ersten Torflügel 12d und dem zweiten Torflügel 12c in Richtung des gekrümmten Pfeils 42 um 90° zum Träger 14 hin geklappt. Abgesichert muss bei dieser Bewegung der Torflügel 12a, 12b, 12c, 12d nur die in der Bewegungsrichtung 40, 42 jeweils vorne liegende Seite der ersten Torflügel 12a, 12d sein. Infolgedessen werden die ersten Laserscanner 20a vor Beginn dieser Bewegung aus den ersten Torflügeln 12a, 12d ausgefahren und spannen während der Bewegung einen Lichtvorhang parallel und vor den ersten Torflügeln 12a, 12d auf.

Ausgehend von der Stellung der Fig. 6 gelangen die Torflügel 12a, 12b, 12c, 12d dann in die vollständig geöffnete Stellung der Fig. 7. Der erste Torflügel 12a liegt nun parallel zum Träger 14 und der zweite Torflügel 12b ist parallel zum ersten Torflügel 12a angeordnet. Die Laserscanner 20a, 20b und 20c sind alle in ihre Ruhestellung innerhalb der Torflügel 12a, 12b verfahren.

Genauso sind die beiden Torflügel 12d und 12c nun parallel zu dem in Fig. 7 rechten Träger 14 angeordnet und die Laserscanner 20a, 20b, 20c sind in ihrer eingefahrenen Ruhestellung angeordnet. Eine Gebäudeöffnung ist nun im Wesentlichen vollständig freigegeben.

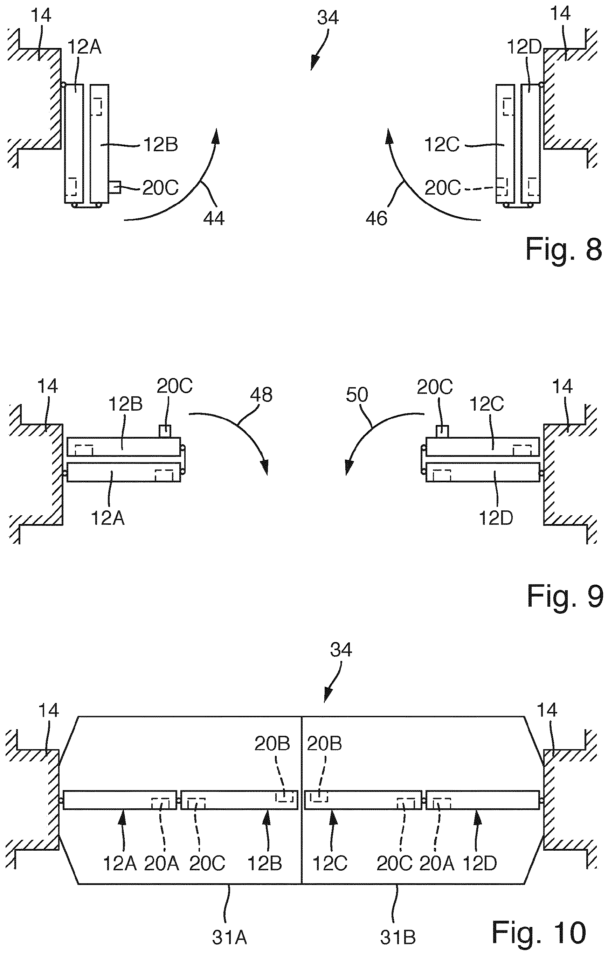

Die Darstellungen der Fig. 8 bis 10 zeigen einen Schließvorgang des Schwenktores 34 ausgehend von der vollständig geöffneten Stellung in Fig. 8. Zum Schließen des Schwenktores 34 werden die in der vollständig geöffneten Stellung parallel zueinander angeordneten Torflügel 12a, 12b gemeinsam um 90° vom Träger 14 weggeschwenkt. Diese Bewegung ist mittels eines gekrümmten Pfeils 44 angedeutet. Bevor sich das Paket aus den Torflügeln 12a, 12b beginnt zu bewegen, wird der dritte Laserscanner 20c ausgefahren und spannt dadurch einen Lichtvorhang vor der in Bewegungsrichtung 44 vorne liegenden Seite des zweiten Torflügels 12b auf.

In gleicher Weise wird der dritte Laserscanner 20c in dem zweiten Torflügel 12c ausgefahren, spannt einen Lichtvorhang auf und nachfolgend wird das Paket aus den Torflügeln 12c, 12d gemeinsam um 90° vom in Fig. 8 rechten Träger 14 weggeschwenkt. Diese Bewegung ist durch einen gekrümmten Pfeil 46 angedeutet.

Ausgehend vom Zustand der Fig. 8 gelangen die Torflügel 12a, 12b, 12c, 12d in die in Fig. 9 dargestellte teilweise geschlossene Stellung. Die beiden Torflügel 12a, 12d befinden sich bereits in ihrer Endstellung, die sie auch bei vollständig geschlossenem Schwenktor 34 einnehmen. Die zweiten Torflügel 12b, 12c müssen noch ausgehend von der in Fig. 9 dargestellten Stellung um 180° vom jeweiligen Träger 14 weggeschwenkt werden. Auch bei dieser Schwenkbewegung gemäß den gekrümmten Pfeilen 48, 50 bleiben die dritten Laserscanner 20c aktiv und sichern eine Bewegung der zweiten Torflügel 12b, 12c ab.

Ausgehend vom Zustand der Fig. 9 gelangen die Torflügel 12a, 12b, 12c, 12d in die vollständig geschlossene Stellung des Schwenktores 34, die in Fig. 10 dargestellt ist. In diesem, vollständig geschlossenen Zustand sind alle Torflügel 12a, 12b, 12c und 12d parallel zueinander angeordnet und verschließen eine Gebäudeöffnung zwischen den beiden Trägern 14 vollständig. Die Laserscanner 20a, 20b und 20c befinden sich nun sämtlich in ihrer eingefahrenen Ruhestellung. Zum Öffnen des Tores werden die zweiten Laserscanner 20b, 20c ausgefahren und aktiviert und der Öffnungsvorgang erfolgt, wie bereits beschrieben wurde, anhand des Bewegungsablaufs der Fig. 5 bis 7.

Anhand der Fig. 5 bis 10 ist zu erkennen, dass bei einem insgesamt vierflügeligen Schwenktor 34 sechs Laserscanner 20a, 20b, 20c genügen, um eine Bewegung der Torflügel 12a, 12b, 12c, 12d abzusichern. Pro Seite des Schwenktores 34, also für jede Seite, die aus jeweils einem ersten Torflügel 12a und einem zweiten Torflügel 12b bzw. einem ersten Torflügel 12d und einem zweiten Torflügel 12c besteht, genügen drei Laserscanner 20a, 20b, 20c. Ein erster Laserscanner 20a muss dabei eine beim Öffnen vorne liegende Seite der ersten Torflügel 12a, 12d absichern. Ein zweiter Laserscanner 20b muss eine beim Öffnen vorne liegende Seite der zweiten Torflügel 12b, 12c absichern. Ein dritter Laserscanner 20c muss eine beim Schließen vorne liegende Seite der zweiten Torflügel 12b, 12c absichern.

In Fig. 10 eingezeichnet sind die Umrisse zweier zusätzlicher Lichtvorhänge 31a, 31b, siehe auch Fig. 1. Diese beiden Lichtvorhänge 31a, 31b verlaufen parallel zu einer Bodenoberfläche und unterhalb einer Unterkante der Torflügel 12a, 12b, 12c, 12d. Die Lichtvorhänge 31a, 31b werden jeweils von in Fig. 10 nicht dargestellten Laserscannern 29 erzeugt, siehe Fig. 1, die an den Trägern 14 angeordnet sind, und zwar am unteren Ende der Träger 14, wo diese auf der Bodenoberfläche aufstehen. Die Lichtvorhänge 31a, 31b werden erst kurz vor dem Erreichen der in Fig. 10 dargestellten vollständig geschlossenen Position erzeugt, um kurz vor dem vollständigen Schließen des Tores sicherzustellen, dass sich keine Personen vor oder hinter den Torflügeln 12a, 12b, 12c, 12d befinden. Dies deshalb, um sicherzustellen, dass sich Personen nicht in den zwischen den Torflügeln 12a, 12b, 12c, 12d und den Trägern 14 vorhandenen Spalten einklemmen, die mit dem vollständigen Schließen des Tores stark verengt werden. Der Bereich dieser Spalte ist zwar vorteilhafterweise durch Schaltleisten abgedeckt, das Vorsehen der parallel zur Bodenoberfläche verlaufenden Lichtvorhänge 31a, 31b kann hier aber zusätzliche Sicherheit schaffen. Die Lichtvorhänge 31a, 31b werden bewusst nicht während des vollständigen Schließvorgangs eingeschaltet, um auch dann, wenn sich Personen im Bewegungsbereich des Tores befinden, den Schließvorgang bzw. Öffnungsvorgang dennoch einleiten zu können.

Im Ergebnis lässt sich durch die Sicherheitsanordnung und das Schwenktor 34 eine sehr zuverlässige Absicherung der Bewegung eines motorisch betriebenen Schwenktores mit geringem Aufwand zuverlässig realisieren.

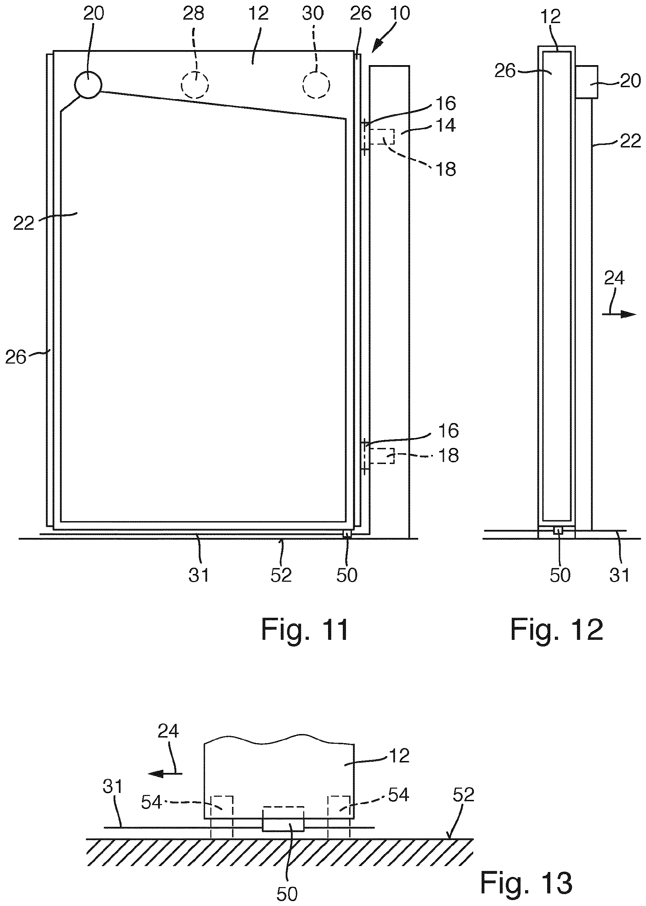

Die Darstellung der Fig. 11 zeigt schematisch ein Schwenktor 10 mit einem Torflügel 12 gemäß einer Ausführungsform der Erfindung, das sehr ähnlich zum Schwenktor 10 der Fig. 1 aufgebaut ist. Es werden daher lediglich die Unterschiede zum Schwenktor 10 der Fig. 1 erläutert.

Beim Schwenktor 10 der Fig. 1 wird ein Lichtvorhang 31 mittels eines Laserscanners 29 erzeugt, der am unteren Ende des Trägers 14 angeordnet ist. Bei dem Schwenktor 10 der Fig. 11 ist ein Laserscanner 50 an einer Unterseite des Torflügels 12 angeordnet, der aus der Unterseite des Torflügels 12 ausfahrbar ausgebildet ist. Bei der Ausführungsform der Fig. 11 erzeugt der Laserscanner 50 den Lichtvorhang 31, der sich parallel zu einer Bodenoberfläche 52 zwischen einer Unterseite des Torflügels 12 und der Bodenoberfläche 52 erstreckt. Der Lichtvorhang kann dabei in seinen Abmessungen im Wesentlichen beliebig eingestellt werden. In der Darstellung der Fig. 11 ist zu erkennen, dass sich der Lichtvorhang 31 ausgehend vom Laserscanner 50 über die gesamte Unterseite des Torflügels 12 erstreckt und erst kurz nach dem in Fig. 11 linken Ende des Torflügels 12 endet. In der anderen Richtung erstreckt sich der Lichtvorhang 31 ausgehend vom Laserscanner 50 ein Stück weit in Richtung des Trägers 14.

Die Darstellung der Fig. 12 zeigt den Torflügel 12 der Fig. 11 in einer Seitenansicht. Zu erkennen ist, dass der Lichtvorhang 31 sich ausgehend vom Laserscanner 50 in und entgegen der Bewegungsrichtung 24 erstreckt, um die vollständige Unterseite des Torflügels 12 abzudecken. In der Bewegungsrichtung 24 erstreckt sich der Lichtvorhang 31 ein Stück weit über die Vorderseite des Torflügels 12 hinaus, um beispielsweise auf der Bodenoberfläche 52 liegende Gegenstände ausreichend weit vor der Vorderseite des Torflügels 12 zu erfassen, um dadurch eine Kollision des Torflügels 12 mit solchen Gegenständen zu vermeiden.

Die Darstellung der Fig. 13 zeigt den Torflügel 12 der Fig. 12 abschnittsweise im Bereich seiner Unterseite. Zu erkennen ist der Laserscanner bzw. Sensor 50, der ausgehend von einer gestrichelten Position innerhalb des Torflügels 12 in Richtung auf die Bodenoberfläche 52 ausgefahren wurde, um den Lichtvorhang 31 zu erzeugen. In der Darstellung der Fig. 13 ist die Bewegungsrichtung 24 nach links gerichtet dargestellt.

Der Torflügel 12 weist ausfahrbare Dichtleisten 54 auf, die im Zustand der Fig. 13 innerhalb des Torflügels 12 dargestellt und daher lediglich gestrichelt angedeutet sind. Die Dichtleisten 54 können dann, wenn der Torflügel 12 stillsteht, vorzugsweise in der vollständig geschlossenen Position des Schwenktors, aus der Unterseite des Torflügels 12 in Richtung auf die Bodenoberfläche ausgefahren werden. Diese ausgefahrene Stellung ist in Fig. 13 ebenfalls gestrichelt angedeutet. Der Laserscanner 50 ist zwischen den beiden ausfahrbaren Dichtleisten 54 angeordnet. Wenn der Torflügel 12 bewegt werden soll, müssen die Dichtleisten 54 zunächst von der Bodenoberfläche 54 abgehoben und in den Torflügel 12 eingefahren werden. Gleichzeitig kann der Laserscanner 50 aus der Unterseite des Torflügels 12 ausgefahren werden und, noch bevor der Torflügel 12 beginnt, sich zu bewegen, wird der Lichtvorhang 31 erzeugt und überwacht.

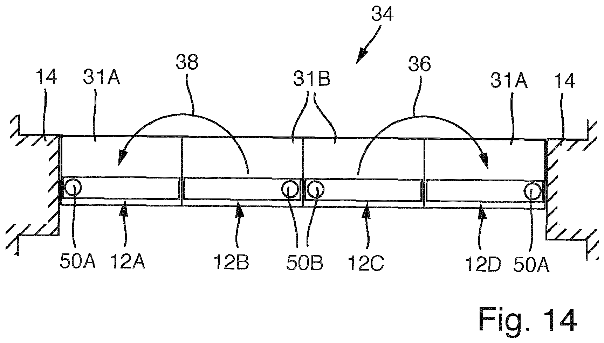

Die Darstellung der Fig. 14 zeigt eine erfindungsgemäße Ausführungsform eines Schwenktores 34 in der vollständig geschlossenen Stellung. Das Schwenktor 34 entspricht weitgehend dem in Fig. 5 dargestellten Schwenktor und es werden lediglich die Unterschiede zum Schwenktor 34 der Fig. 5 erläutert. Der Vollständigkeit halber sei bemerkt, dass die Laserscanner 20A, 20B, 20C aus Fig. 5 der Übersichtlichkeit halber in Fig. 14 nicht dargestellt sind. Diese Laserscanner 20A, 20B, 20C können aber auch bei der in Fig. 14 dargestellten Ausführungsform des Schwenktors 34 vorhanden sein.

Dargestellt sind in Fig. 14 lediglich vier Laserscanner 50A, 50B, wobei in jedem Torflügel 12A, 12B, 12C, 12D jeweils ein Laserscanner 50A, 50B vorgesehen ist. Jeder der Laserscanner 50A, 50B ist zwischen einer Unterseite des jeweiligen Torflügels 12A, 12B, 12C, 12D und der Bodenoberfläche 52, siehe Fig. 13, angeordnet und ist aus der Unterseite der Torflügel 12A, 12B, 12C, 12D ausfahrbar. Die Laserscanner 50A, 50B erzeugen jeweils einen Lichtvorhang 31A, 31B. Die Lichtvorhänge 31A, 31B sind bei der dargestellten Ausführungsform jeweils rechteckig, können aber in Bezug auf ihre geometrische Form im Wesentlichen beliebig eingestellt werden.

Der Zustand der Fig. 14 zeigt den vollständig geschlossenen Zustand. Ausgehend vom Zustand der Fig. 14 wird zunächst der Torflügel 12B in Richtung des gekrümmten Pfeils 38 verschwenkt und der Torflügel 12C wird in Richtung des gekrümmten Pfeils 36 verschwenkt. Die Lichtvorhänge 31A, 31B zwischen den Torflügeln 12A, 12B, 12C, 12D decken daher bei den Torflügeln 12B, 12C im Wesentlichen den in Bewegungsrichtung vorne liegenden Bereich ab. Bei den Torflügeln 12A, 12D wird der Bereich abgedeckt, in dem der Torflügel 12B bzw. der Torflügel 12C zu liegen kommt.

Es ist zu erkennen, dass die Lichtvorhänge 31A, 31B jeweils die vollständige Unterseite der Torflügel 12A, 12B, 12C, 12D abdecken und sich auch entgegen der Bewegungsrichtung ein Stück weit über die Unterseite der Torflügel 12A, 12B, 12C, 12D hinaus erstrecken. Die Lichtvorhänge 31A, 31B können sich auch überlappen, wie ausgeführt können die geometrischen Abmessungen der Lichtvorhänge 31A, 31B im Wesentlichen beliebig eingestellt werden, um auf den jeweils vorliegenden Anwendungsfall angepasst zu werden.

Ausgehend vom Zustand der Fig. 14 wird, siehe Fig. 6, dann ein weiterer Zwischenzustand erreicht. Die jeweils äußeren Torflügel 12A, 12D werden dann zusammen mit den angeklappten Torflügeln 12B bzw. 12C nach unten weggeklappt, siehe Fig. 6, Fig. 7. Die Lichtvorhänge 31A werden für diese weitere Bewegung dann so umgestellt, dass sie den dann in Bewegungsrichtung vorne liegenden Bereich der Torflügel 12A, 12D abdecken. In Fig. 14 wäre dies dann der Bereich unterhalb der Torflügel 12A, 12D.

Die Anordnung der Laserscanner 50A, 50B an einer Unterseite der Torflügel 12A, 12B, 12C, 12D, ausfahrbar aus der jeweiligen Unterseite, ermöglicht es, eine gegen Verschmutzung und Beschädigung sehr unempfindliche Anordnung zu schaffen.

## Patentansprüche

1. Torflügel (12, 12a, 12b, 12c, 12d) für Schwenktore (10), mit wenigstens einem Torflügel (12, 12a, 12b, 12c, 12d) mit einer Sicherheitsanordnung und einem motorischen Antrieb (18) für den Torflügel (12, 12a, 12b, 12c, 12d), wobei wenigstens ein am Torflügel (12, 12a, 12b, 12c, 12d) angeordneter Sensor vorgesehen ist, und wobei der Sensor zum Erzeugen und Überwachen eines Lichtvorhangs (22, 31a, 31b) vorgesehen ist, welcher Lichtvorhang (22, 31a, 31b) parallel zu einer Bodenoberfläche und unterhalb des Torflügels (12, 12a, 12b, 12c, 12d) angeordnet ist, wobei der Sensor im Betrieb aus der Unterseite des Torflügels (12, 12a, 12b, 12c, 12d) vorragt, **dadurch gekennzeichnet, dass** der Sensor als Laserscanner (50) ausgebildet ist und der Laserscanner (50) vor einem Beginn der Bewegung des Torflügels aus der Unterseite des Torflügels (12, 12a, 12b, 12c, 12d) ausfahrbar ausgebildet ist, und wobei gegebenenfalls zusätzlich ein weiterer Sensor zum Erzeugen und Überwachen eines parallel zu einer in Bewegungsrichtung des Torflügels (12, 12a, 12b, 12c, 12d) vorne liegenden Seite des Torflügels (20) angeordneten Lichtvorhangs vorgesehen ist.

2. Torflügel (12, 12a, 12b, 12c, 12d) nach Anspruch 1, **dadurch gekennzeichnet, dass** der Sensor als Infrarot-Laserscanner (20) ausgebildet ist.

3. Torflügel (12, 12a, 12b, 12c, 12d) nach einem der vorstehenden Ansprüche, **dadurch gekennzeichnet, dass** ein Erfassungsbereich des weiteren Sensors in zwei Richtungen parallel zur Vorderseite des Torflügels (12, 12a, 12b, 12c, 12d) einstellbar ist.

4. Torflügel (12, 12a, 12b, 12c, 12d) nach wenigstens einem der vorstehenden Ansprüche, **dadurch gekennzeichnet, dass** ein Erfassungsbereich des Sensors in Abhängigkeit eines Schwenkwinkels des Torflügels (12, 12a, 12b, 12c, 12d) einstellbar ist.

5. Torflügel (12, 12a, 12b, 12c, 12d) nach einem der vorstehenden Ansprüche, **dadurch gekennzeichnet, dass** der weitere Sensor im Betrieb aus der vorne liegenden Seite des Torflügels (12, 12a, 12b, 12c, 12d) vorragt.

6. Torflügel (12, 12a, 12b, 12c, 12d) nach Anspruch 5, **dadurch gekennzeichnet, dass** wenigstens ein Aktuator (32) vorgesehen ist, um den weiteren Sensor ausgehend von einer bündig oder innerhalb des Torflügels (12, 12a, 12b, 12c, 12d) angeordneten Ruhestellung in eine aus der vorne liegenden Seite des Torflügels (12, 12a, 12b, 12c, 12d) vorragende Betriebsstellung zu bewegen.

7. Torflügel (12, 12a, 12b, 12c, 12d) nach wenigstens einem der vorstehenden Ansprüche, **dadurch gekennzeichnet, dass** wenigstens an den Seitenkanten des Torflügels (12, 12a, 12b, 12c, 12d) Schaltleisten vorgesehen sind, die beim Annähern an ein Hindernis oder beim Berühren eines Hindernisses ein Schaltsignal erzeugen.

8. Verfahren zum Absichern eines Torflügels (12, 12a, 12b, 12c, 12d) gemäß wenigstens einem der vorstehenden Ansprüchen beim Öffnen und Schließen, **gekennzeichnet durch** Erzeugen eines Lichtvorhangs (22, 31a, 31b) parallel zu einer Bodenoberfläche und unterhalb des Torflügels (12, 12a, 12b, 12c, 12d) und gegebenenfalls zusätzlich parallel zu einer in Bewegungsrichtung vorne liegenden Seite des Torflügels (12, 12a, 12b, 12c, 12d) sowie Erzeugen des Lichtvorhangs (22, 31a, 31b) mittels eines Laserscanners (20, 50) und Anhalten einer Bewegung des Torflügels (12, 12a, 12b, 12c, 12d) beim Detektieren eines Hindernisses im Bereich des Lichtvorhangs (22, 31a, 31b) durch Ausfahren von Sensoren zum Erzeugen und Überwachen des Lichtvorhangs (22, 31a, 31b) vor einem Beginn der Bewegung des Torflügels (12, 12a, 12b, 12c, 12d) beim Öffnen und Schließen, wobei der Laserscanner (50) aus der Unterseite des Torflügels (12, 12a, 12b, 12c, 12d) ausfahrbar ausgebildet ist und im Betrieb aus der Unterseite des Torflügels (12, 12a, 12b, 12c, 12d) vorragt.

9. Verfahren nach Anspruch 8, **gekennzeichnet durch** Mitbewegen des Lichtvorhangs (22, 31a, 31b) mit dem Torflügel (12, 12a, 12b, 12c, 12d) beim Öffnen und Schließen.

## Claims

1. Door leave (12, 12a, 12b, 12c, 12d) for swing doors (10) having at least one door leaf (12, 12a, 12b, 12c, 12d) having a safety assembly and a motorized drive (18) for the door leaf (12, 12a, 12b, 12c, 12d), wherein at least one sensor, disposed on the door leaf (12, 12a, 12b, 12c, 12d), is provided, and wherein the sensor is provided for generating and monitoring a light curtain (22, 31a, 31b), which light curtain (22, 31a, 31b) is disposed so as to be parallel with a floor surface and below the door leaf (12, 12a, 12b, 12c, 12d), wherein the sensor during operation protrudes from the lower side of the door leaf (12, 12a, 12b, 12c, 12d), **characterized in that** the sensor is a laser scanner (50), and the laser scanner (50) is configured so as to be deployable from the lower side of the door leaf (12, 12a, 12b, 12c, 12d) prior to commencement of the movement of the door leaf, and wherein, as required, additionally a further sensor for generating and monitoring a light curtain disposed in parallel to a side of the door leaf (20) located in front in the direction of movement of the door leaf (12, 12a, 12b, 12c, 12d) is provided.

2. Door leaves (12, 12a, 12b, 12c, 12d) according to Claim 1, **characterized in that** the sensor is configured as an infrared laser scanner (20).

3. Door leaves (12, 12a, 12b, 12c, 12d) according to one of the preceding claims, **characterized in that** an acquisition range of the further sensor is adjustable in two directions which are parallel with the front side of the door leaf (12, 12a, 12b, 12c, 12d).

4. Door leaves (12, 12a, 12b, 12c, 12d) according to at least one of the preceding claims, **characterized in that** an acquisition range of the sensor is adjustable depending on a pivot angle of the door leaf (12, 12a, 12b, 12c, 12d).

5. Door leaves (12, 12a, 12b, 12c, 12d) according to one of the preceding claims, **characterized in that** the further sensor during operation protrudes from the side of the door leaf (12, 12a, 12b, 12c, 12d) located in front.

6. Door leaves (12, 12a, 12b, 12c, 12d) according to Claim 5, **characterized in that** at least one actuator (32) is provided in order to move the further sensor, proceeding from a rest position which is disposed so as to be flush with or within the door leaf (12, 12a, 12b, 12c, 12d), to an operating position which protrudes from the side of the door leaf (12, 12a, 12b, 12c, 12d) located in front.

7. Door leaves (12, 12a, 12b, 12c, 12d) according to at least one of the preceding claims, **characterized in that** switch rails which generate a switch signal when approaching an obstacle or contacting an obstacle are provided at least on the lateral edges of the door leaf (12, 12a, 12b, 12c, 12d).

8. Method for securing a door leaf (12, 12a, 12b, 12c, 12d) according to at least one of the preceding claims during opening and closing, **characterized by** generating a light curtain (22, 31a, 31b) which is parallel to a floor surface and below the door leaf (12, 12a, 12b, 12c, 12d) and, as required, additionally in parallel to a side of the door leaf (12, 12a, 12b, 12c, 12d) that in a direction of movement is at the front, and generating the light curtain (22, 31a, 31b) by means of a laser scanner (20, 50) and stopping a movement of the door leaf (12, 12a, 12b, 12c, 12d) when an obstacle in the range of the light curtain (22, 31a, 31b) is detected by deploying sensors for generating and monitoring the light curtain (22, 31a, 31b) prior to commencement of the movement of the door leaf (12, 12a, 12b, 12c, 12d) during opening and closing, wherein the laser scanner (50) is configured so as to be deployable from the lower side of the door leaf (12, 12a, 12b, 12c, 12d) and during operation protrudes from the lower side of the door leaf (12, 12a, 12b, 12c, 12d).

9. Method according to Claim 8, **characterized by** conjoint movement of the light curtain (22, 31a, 31b) with the door leaf (12, 12a, 12b, 12c, 12d) during opening and closing.

## Revendications

1. Battant de porte (12, 12a, 12b, 12c, 12d) pour des portes pivotantes (10), avec au moins un battant de porte (12, 12a, 12b, 12c, 12d) avec un dispositif de sécurité et un entraînement motorisé (18) pour le battant de porte (12, 12a, 12b, 12c, 12d), dans lequel il est prévu un capteur disposé sur le battant de porte (12, 12a, 12b, 12c, 12d) et dans lequel le capteur est prévu pour produire et surveiller un rideau de lumière (22, 31a, 31b), rideau de lumière (22, 31a, 31b) qui est disposé parallèlement à une surface de sol et en dessous du battant de porte (12, 12a, 12b, 12c, 12d), dans lequel le capteur fait saillie en fonctionnement hors du côté inférieur du battant de porte (12, 12a, 12b, 12c, 12d), **caractérisé en ce que** le capteur est formé par un scanner laser (50) et le scanner laser (50) est déplaçable hors du côté inférieur du battant de porte (12, 12a, 12b, 12c, 12d) avant le début du mouvement du battant de porte, et dans lequel il est éventuellement prévu en outre un autre capteur pour produire et surveiller un rideau de lumière disposé parallèlement à un côté du battant de porte (20) situé en avant dans la direction du mouvement du battant de porte (12, 12a, 12b, 12c, 12d).

2. Battant de porte (12, 12a, 12b, 12c, 12d) selon la revendication 1, **caractérisé en ce que** le capteur est un scanner laser à infrarouge (20).

3. Battant de porte (12, 12a, 12b, 12c, 12d) selon l'une quelconque des revendications précédentes, **caractérisé en ce qu'**une plage de détection de l'autre capteur peut être réglée dans deux directions parallèles au côté avant du battant de porte (12, 12a, 12b, 12c, 12d).

4. Battant de porte (12, 12a, 12b, 12c, 12d) selon au moins une des revendications précédentes, **caractérisé en ce qu'**une plage de détection du capteur peut être réglée en fonction de l'angle de pivotement du battant de porte (12, 12a, 12b, 12c, 12d).

5. Battant de porte (12, 12a, 12b, 12c, 12d) selon l'une quelconque des revendications précédentes, **caractérisé en ce que** l'autre capteur fait saillie en fonctionnement hors du côté situé en avant du battant de porte (12, 12a, 12b, 12c, 12d).

6. Battant de porte (12, 12a, 12b, 12c, 12d) selon la revendication 5, **caractérisé en ce qu'**il est prévu au moins un actionneur (32), pour déplacer l'autre capteur à partir d'une position de repos disposée à fleur ou à l'intérieur du battant de porte (12, 12a, 12b, 12c, 12d) jusqu'à une position de fonctionnement saillante hors du côté situé en avant du battant de porte (12, 12a, 12b, 12c, 12d).

7. Battant de porte (12, 12a, 12b, 12c, 12d) selon au moins une des revendications précédentes, **caractérisé en ce qu'**il est prévu au moins sur les bords latéraux du battant de porte (12, 12a, 12b, 12c, 12d) des barrettes de commutation, qui produisent un signal de commutation lors de l'approche d'un obstacle ou lors du contact avec un obstacle.

8. Procédé de sécurisation d'un battant de porte (12, 12a, 12b, 12c, 12d) selon au moins une des revendications précédentes lors de l'ouverture et de la fermeture, **caractérisé par** la production d'un rideau de lumière (22, 31a, 31b) parallèle à une surface de sol et en dessous du battant de porte (12, 12a, 12b, 12c, 12d) et éventuellement parallèle en outre à un côté du battant de porte (12, 12a, 12b, 12c, 12d) situé en avant dans la direction de mouvement ainsi que par la production du rideau de lumière (22, 31a, 31b) au moyen d'un scanner laser (20, 50) et l'arrêt d'un mouvement du battant de porte (12, 12a, 12b, 12c, 12d) lors de la détection d'un obstacle dans la région du rideau de lumière (22, 31a, 31b) en faisant sortir des capteurs pour produire et surveiller le rideau de lumière (22, 31a, 31b) avant un début du mouvement du battant de porte (12, 12a, 12b, 12c, 12d) lors de l'ouverture et de la fermeture, dans lequel le scanner laser (50) est réalisé de façon à pouvoir sortir hors du côté inférieur du battant de porte (12, 12a, 12b, 12c, 12d) et fait saillie en fonctionnement hors du côté inférieur du battant de porte (12, 12a, 12b, 12c, 12d).

9. Procédé selon la revendication 8, **caractérisé par** l'entraînement du rideau de lumière (22, 31a, 31b) avec le battant de porte (12, 12a, 12b, 12c, 12d) lors de l'ouverture et de la fermeture.
